# EUROPÄISCHE PATENTANMELDUNG

(11) **EP 1 205 900 A1**
(43) Veröffentlichungstag der Anmeldung: **15.05.2002**
(21) Anmeldenummer: 01124189.0
(22) Anmeldetag: 11.10.2001
(51) Int. Cl.: G09B 25/00

(54) **Planungs- und Verkaufseinrichtung für Badezimmer und Küchen**

(30) Priorität: 14.11.2000 CH 22092000
(71) Anmelder: Gebr. Baur AG, 6340 Baar (CH)
(72) Erfinder: Baur, Markus, 6340 Baar (CH)
(74) Vertreter: Kägi, Otto Patentanwalt

(57) **Zusammenfassung**

Über einer Bodenfläche (1) ist ein System von mobilen Wandelementen (4) angeordnet, die an längs- und quer montierten Schienen (2) verschiebbar sind, um einen gegebenen Raum-Grundriss in natürlicher Grösse nachzubilden. Gegenstände (10-22) für die Ausstattung z.B. eines Badezimmers werden nach Bedarf einem Auswahlsortiment in Originalgrösse entnommen und an geeigneter Stelle teilweise auf den Boden (1) gestellt oder an den Wandelementen (4) montiert. Die letzteren weisen eine Magnethaftschicht (8) auf, und die für Wandmontage bestimmten Gegenstände (14, 16, 20, 22) sind mit Haftmagneten versehen. Dadurch können die ausgewählten Gegenstände mühelos angebracht, verschoben und ausgetauscht werden. Ein Teil der Gegenstände des Sortiments ist als Attrappe gestaltet; vor allem schwere Gegenstände für Wandmontage, wie Lavabos (14), Toiletten (16) usw. sind als Attrappen in Leichtbauweise, z.B. aus PU-Hartschaum ausgeführt, wodurch das Gewicht drastisch vermindert wird. - Die Einrichtung ist vor allem für die Planung und den Verkauf von Badezimmern und Küchen geeignet. Sie ermöglicht eine realistische Nachbildung der Objekte im Massstab 1:1 und eine optimale Auswahl und Anordnung der Ausstattung.

## Beschreibung

Die vorliegende Erfindung betrifft eine Einrichtung für die Planung und den Verkauf von mit Apparaten und/oder Möbeln auszustattenden Räumen, insbesondere Badezimmern und Küchen.

Beim Projektieren der Ausgestaltung solcher Räume muss die Anordnung der üblicherweise fest zu installierenden Apparate - z.B. Badewanne, Dusche, Klosett, Waschtische mit zugehörigen Armaturen im Badezimmer, Koch- und Backgeräte, Dampfabzug, Kühlschrank, Spültisch usw. mit Armaturen in der Küche - sowie der zugehörigen Möbel und Accessoires festgelegt werden. Das planende und ausführende Unternehmen (Sanitär-Installateur) wäre dabei sehr daran interessiert, die Auftraggeber bzw. späteren Benutzer in die Gestaltung einzubeziehen im Hinblick z.B. auf verschiedene Körpergrössen, individuelle Bedürfnisse und Lebensgewohnheiten. Bei der Planung sind selbstverständlich die jeweilige Raumsituation (Grundriss, Fenster, Türen usw.) und die technischen Gegebenheiten (Leitungsführung usw.) zu berücksichtigen. In Frage kommen sowohl künftige Wohnbauten (Ein- und Mehrfamilienhäuser) als auch der Umbau bzw. die Neueinrichtung bestehender Räume entsprechend den Wünschen der Eigentümer oder Benutzer.

Als Möglichkeiten zur "vorausschauenden" Visualisierung stehen bisher die Skizze, der Plan und die EDV-gestützte, dreidimensionale Darstellung im verkleinerten Massstab zur Verfügung. Erfahrungsgemäss besteht nun häufig die Schwierigkeit, dass der angesprochene Kunde (Bauherr, Architekt usw.) sich anhand solcher Darstellungen - auch angesichts vielfältiger Gestaltungsmöglichkeiten - mangels räumlichem Vorstellungsvermögen kein ausreichend konkretes oder zutreffendes Bild vom künftigen Bauobjekt und seiner Ausstattung machen kann. Es ergeben sich daraus oft langwierige Planungen und Verkaufsgespräche, aber auch die höchst unbefriedigende Folge, dass das fertige Ergebnis nicht den Erwartungen des Kunden entspricht.

Mit der Erfindung sollen diese Schwierigkeiten beseitigt werden, indem eine neuartige Planungshilfe geschaffen wird, die eine realitätsnahe Darstellung und einfache Varationsmöglichkeiten bei der Auswahl und Gestaltung der Raumausstattung bietet.

Die erfindungsgemässe Einrichtung, mit welcher diese Aufgabe gelöst wird, ist dadurch gekennzeichnet, dass ein über einer Bodenfläche angeordnes System von mobilen Wandelementen vorhanden ist, um einen jeweils vorgegebenen Raum-Grundriss in natürlicher Grösse nachzubilden, wobei die Wandelemente mindestens in Teilbereichen mit einer Magnethaftschicht versehen sind, und dass ein Auswahlsortiment von Ausstattungsgegenständen, insbesondere von Apparaten und/oder Möbeln in Originalgrösse besteht, von denen die für Wandmontage bestimmten Gegenstände des Sortiments im Bereich ihrer Montageflächen mit Haftmagneten versehen und mindestens teilweise als Attrappen gestaltet sind.

Mit der Erfindung wird insbesondere eine rationelle und zielsichere Planung ermöglicht. Einerseits kann der jeweils gegebene Raumgrundriss exakt im Massstab 1:1 nachgebildet werden, und andererseits können beliebige Varianten der Raumausstattung mit geringem Aufwand in Originalgrösse eingerichtet und realistisch beurteilt werden. Die beteiligten Personen sind nicht auf Plankenntnisse und stark verkleinerte Darstellungen angewiesen, sondern können das projektierte Objekt direkt begehen, den räumlichen Eindruck körperlich "erleben" und die Zweckmässigkeit der Anordnung beurteilen. Die so ermittelte Anordnung und Auswahl der Ausstattung dient als Grundlage für die konkrete Ausführung des Objekts, wodurch Planungs- und Ausführungsmängel praktisch ausgeschlossen sind.

Zweckmässige, besondere Ausführungsvarianten des im Patentanspruch 1 definierten Erfindungsgegenstandes sind in den abhängigen Ansprüchen angegeben.

Nachstehend wird die Erfindung anhand von Ausführungsbeispielen in Verbindung mit der Zeichnung näher erläutert. Obwohl die weiteren Ausführungen sich auf Badezimmer beziehen, ist ohne Weiteres klar, dass dieselben Einrichtungen bzw. Überlegungen analog auch für die Planung und den Verkauf von Küchen oder von anderen mit Apparaten und/oder Möbeln auszustattenden Räumen gelten.
- Fig. 1: zeigt ein Beispiel eines im Rahmen der Erfindung mittels mobilen Wandelementen gestalteten Raumes, perspektivisch von oben gesehen,
- Fig. 2: ist die perspektivische Ansicht eines nachgebildeten, mindestens teilweise mit Attrappen ausgestatteten Badezimmers, und
- Fig. 3: zeigt im Detail die magnetische Wandbefestigung einer Leichtbau-Attrappe im Vertikalschnitt.

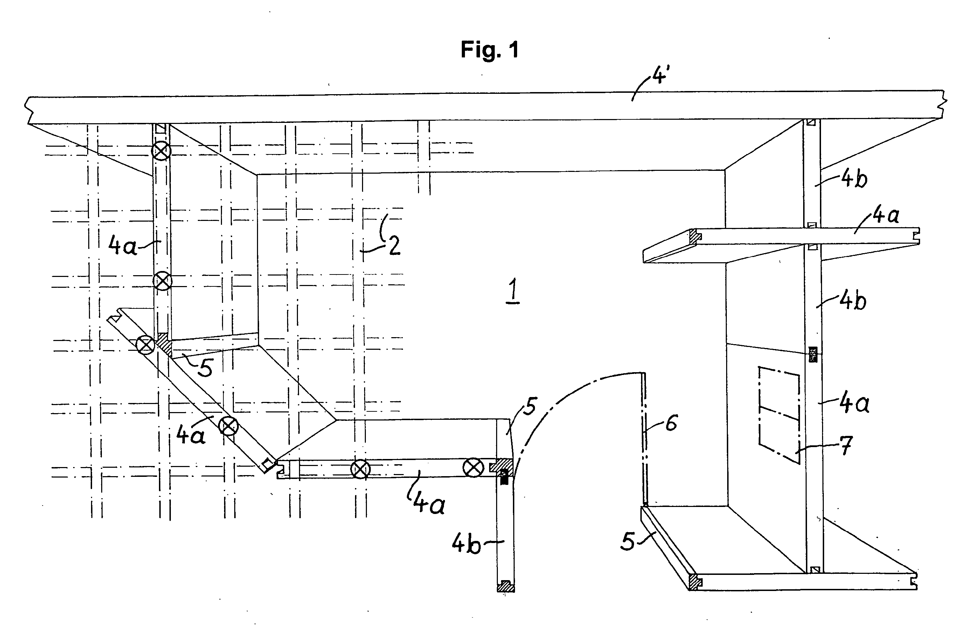

Die beschriebene Einrichtung ist z.B. im Bereich eines grösseren Ausstellungsraumes oder einer Werkhalle einer Installationsfirma oder bei einem Handelsunternehmen usw. vorhanden. In geeigneter Höhe über einer Bodenfläche 1 sind längs und quer verlaufende Trageschienen 2 gitterartig und fest montiert (in Fig. 1 nur im linken Bereich strichpunktiert eingezeichnet). An den Schienen 2 sind mobile Wandelemente 4, wie sie z.B. zur Unterteilung von Büroräumen bekannt sind, einhängbar. Die Verbindung erfolgt an den in Fig. 1 mit "⊗" markierten Stellen mittels je zwei Gleitorganen, die entlang den Schienen 2 und an den Wandelementen in Längsrichtung verschiebbar sind. Solche Gleitorgane sind an sich bekannt und hier nicht im Detail dargestellt. Damit können die hängenden Wandelemente beliebig, auch .schrägstehend, verschoben werden. Es können gemäss Fig. 1 z.B. Wandelemente 4a und 4b verschiedener Breite verwendet werden und ggf. auch eine feststehende Wand 4' als "Rückwand". Nach Bedarf können die Wandelemente 4a und 4b mit Kanten- oder Eckleisten 5 versehen oder mittels Nut-Federverbindung zusammengefügt werden.

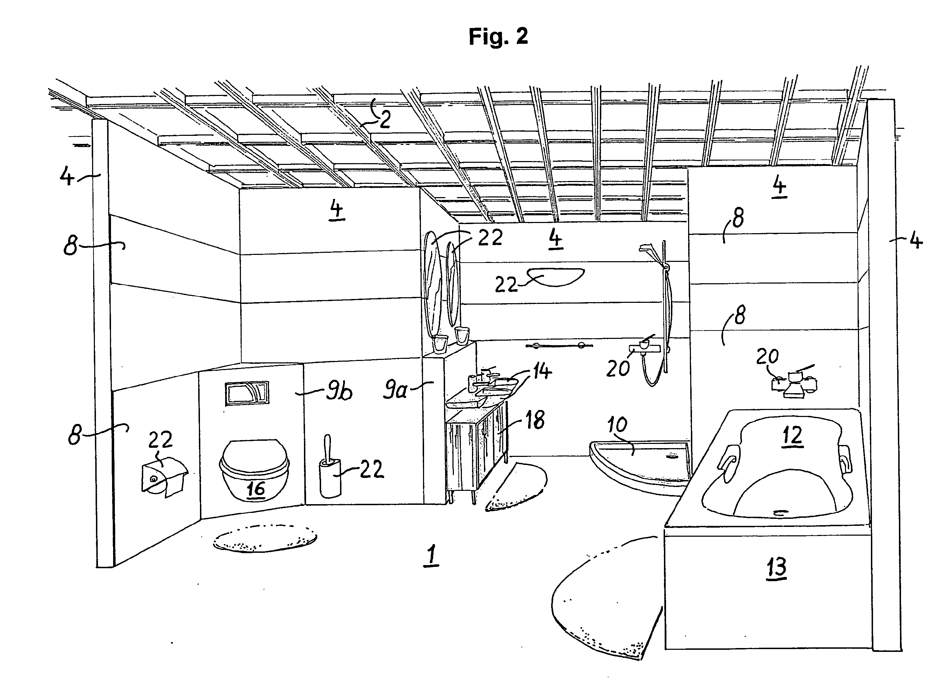

Mit einem solchen System mobiler Wandelemente wird der jeweils vorgegebene Grundriss des auszustattenden Raumes im Massstab 1:1 nachgebildet. Die Elemente 4a, 4b werden dann an Ort auf dem Boden 1 arretiert. Wie in Fig. 1 angedeutet, können einzelne Wandelemente zum An- oder Einbau einer Tür 6 eingerichtet sein; auch Fenster 7 können an Wandelementen simuliert werden, z.B. mittels Bildfolien o.dgl.. Um weitere Besonderheiten des Raumes, wie einspringende Ecken oder Abschrägungen zu berücksichtigen, können entsprechende mobile Elemente 9a, 9b gemäss Fig. 2 verwendet werden.

Der so in natürlicher Grösse nachgebildete Raum wird anschliessend entsprechend den jeweiligen Erfordernissen und individuellen Wünschen mit (Sanitär- oder Küchen-)Apparaten, Armaturen, Möbeln, aber auch nach Bedarf mit Accessoirs und Dekor-Gegenständen ausgestattet. Diese Gegenstände werden aus einem Sortiment ausgewählt; wie weiter unten näher ausgeführt, kann es sich dabei um Originalteile oder Attrappen in Originalgrösse handeln. Fig. 2 zeigt als Beispiel ein so ausgestattetes Badezimmer mit Duschtasse 10, Badewanne 12 mit Unterbau 13, Lavabos 14, Wandtoilette 16, Bodenschrank 18, Auslaufarmaturen 20 sowie einer Reihe von Zubehörteilen 22 (z.B. Papierhalter, Besenhalter, Wandspiegel, Wandleuchte). Auswahl und Anordnung können beliebig variiert werden, wobei natürlich die technischen Gegebenheiten des Bauobjekts zu berücksichtigen sind.

Während manche Gegenstände, wie Duschtassen, Bodenschränke, Badewannen einfach an Ort auf den Boden gestellt werden können, ist für andere, zur Wandmontage bestimmte Gegenstände eine magnetische Befestigung in folgender Weise vorgesehen: Die Wandelemente 4 sind an der Oberfläche mit einer Magnethaftschicht (Stahlblech) 8 versehen. Diese kann auf einer oder auf beiden Seiten vollflächig oder, wie in Fig. 2 dargestellt, nur in bestimmten Bereichen bzw. Höhenzonen vorhanden sein. Entsprechend sind die erwähnten Gegenstände mit Permanent-Haftmagneten ausgerüstet. Die Ausstattung kann dadurch sehr rasch und einfach variiert, d.h. die ausgewählten Gegenstände können mühelos angebracht, verschoben und entfernt bzw. ausgetauscht werden.

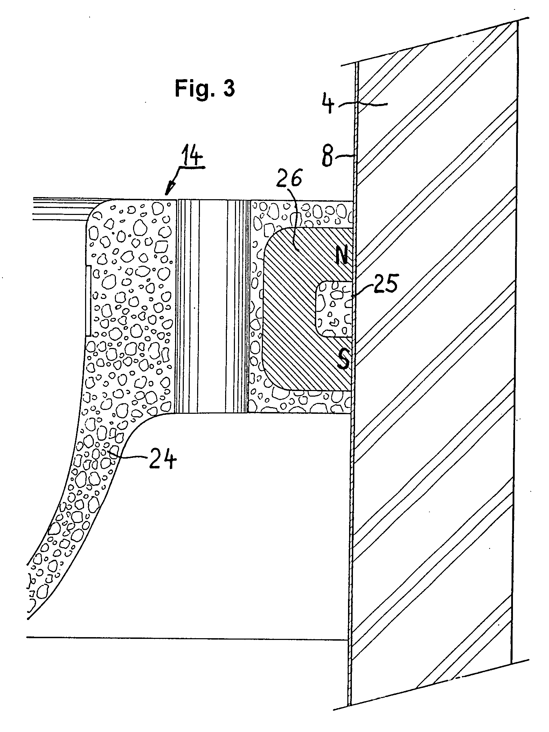

Besonders für die Wandmontage schwerer Gegenstände, wie Wandtoiletten, Waschtische oder Spiegelschränke ist es angezeigt, diese als (formgetreue) Attrappen in Leichtbauweise auszuführen; beim vorliegenden Beispiel trifft dies jedenfalls auf die - im Original keramischen - Lavabos 14 (Waschtische) und die Toilette 16 zu. Die Fig. 3 zeigt als Beispiel eine Lavabo-Attrappe 14 in geeigneter Ausführung. Sie ist aus Polyurethan-Hartschaum 24 hergestellt und weist (mindestens an der sichtbaren Oberfläche) eine Beschichtung auf, die ihr ein "natürliches" Aussehen verleiht. Zweckmässigerweise werden beim Schäumen der Kunststoffmasse die erforderlichen Haftmagnete 26 mit eingebettet, so dass deren Polflächen in die Montagefläche 25 zu liegen kommen. Mit solcher Leichtbauweise wird das Gewicht der Attrappen auf einen Bruchteil des Originalgewichts von Keramikteilen reduziert, was ohne weiteres die Haftmagnet-Befestigung ermöglicht.

Für andere, kleinere Gegenstände wie Armaturen, Papierhalter usw. ist in der Regel keine Leichtbauweise erforderlich; es können Originalteile abgeändert bzw. mit Magneten versehen und als Attrappen verwendet werden. Im übrigen sei erwähnt, dass selbstverständlich auch auf den Boden zu stellende Gegenstände als Attrappen nachgebildet werden können.

Wie "detailgetreu" die Ausstattung jeweils nachgebildet wird, kommt auf den Anwendungsfall an. Bei Bedarf kann auch die Farbgebung (z.B. mit Wand- oder Bodenkacheln) berücksichtigt werden. Die Raumbeleuchtung kann mittels Wand- oder Spiegelschrank-Leuchten simuliert werden oder - eher behelfsmässig - mittels an den Schienen 2 montierten Leuchten.

## Patentansprüche

1. Einrichtung für die Planung und den Verkauf von mit Apparaten und/oder Möbeln auszustattenden Räumen, insbesondere Badezimmern und Küchen, **dadurch gekennzeichnet, dass** ein über einer Bodenfläche (1) angeordnes System von mobilen Wandelementen (4) vorhanden ist, um einen jeweils vorgegebenen Raum-Grundriss in natürlicher Grösse nachzubilden, wobei die Wandelemente (4) mindestens in Teilbereichen mit einer Magnethaftschicht (8) versehen sind,
und dass ein Auswahlsortiment von Ausstattungsgegenständen (10, 12, 13, 14, 16, 18, 20, 22), insbesondere von Apparaten und/oder Möbeln in Originalgrösse besteht, von denen die für Wandmontage bestimmten Gegenstände (14, 16, 20, 22) des Sortiments im Bereich ihrer Montageflächen (25) mit Haftmagneten (26) versehen und mindestens teilweise als Attrappen (14, 16, 20) gestaltet sind.

2. Einrichtung nach Anspruch 1, **dadurch gekennzeichnet, dass** die Attrappen (14, 16) in Leichtbauweise ausgeführt sind.

3. Einrichtung nach Anspruch 2, **dadurch gekennzeichnet, dass** die Attrappen (14, 16) aus Hartschaum (24) mit eingebetteten Haftmagneten (26) hergestellt und an ihrer sichtbaren Oberfläche beschichtet sind.

4. Einrichtung nach Anspruch 1, **dadurch gekennzeichnet, dass** Wandelemente (4) für den Einbau von Türen (6) oder zur Simulation von Fenstern (7) eingerichtet sind.

5. Einrichtung nach Anspruch 1, **gekennzeichnet durch** mobile Elemente (9) zur Nachbildung räumlicher Einzelheiten wie einspringende Ecken oder Abschrägungen.
